# EUROPEAN PATENT APPLICATION

(11) **EP 4 640 617 A1**
(43) Date of publication of application: **29.10.2025**
(21) Application number: 23910127.2
(22) Date of filing: 13.12.2023
(51) Int. Cl.: B66D 1/14, B66D 1/28, B66D 1/54, F16D 11/16

(54) **LIFTING APPARATUS AND CLEANING DEVICE**

(30) Priority: 30.12.2022 CN 202211735573
(71) Applicant: Beijing Roborock Technology Co., Ltd., Beijing 102206 (CN)
(72) Inventor: CHENG, Pan, Beijing 102206 (CN)
(74) Representative: Manitz Finsterwald Patent- und Rechtsanwaltspartnerschaft mbB
(86) International application number: PCT/CN2023/138329
(87) International publication number: WO 2024/140197

(57) **Abstract**

Provided are a lifting apparatus and a cleaning device. The lifting apparatus comprises a lifting assembly (110), a protection assembly (120) and a drive assembly (130). In the process of using the lifting apparatus to drive an object to ascend and descend, the output end of the drive assembly (130) outputs a driving force by means of the protection assembly (120), so as to drive the object to ascend or descend by means of the lifting assembly (110). After the object ascends or descends into place, when the object is displaced by an external force, the object applies a force to the protection assembly (120) by means of the lifting assembly (110), and the protection assembly (120) is separated from the drive assembly (130). In this situation, a hard mechanical contact is not present between the drive assembly and the lifting assembly, the structure of the lifting assembly and the drive assembly is not damaged, the service life of the lifting apparatus can be prolonged, and the control precision of lifting the object by the lifting apparatus can be improved.

## Description

### CROSS-REFERENCE TO RELATED APPLICATION

The present disclosure claims priority to Chinese Patent Application No. 202211735573.X filed with China National Intellectual Property Administration on December 30, 2022 and entitled "LIFTING APPARATUS AND CLEANING DEVICE", the content of which is incorporated herein by reference in its entirety.

### TECHNICAL FIELD

Embodiments of the present disclosure relate to the technical field of cleaning, and in particular, relate to a lifting apparatus and a cleaning device.

### BACKGROUND

In the mechanical field, an object is generally driven to ascend or descend by a lifting apparatus. However, the inventors found that after the object ascends or descends, in the case where the object is subjected to an external force, the object may pull a transmission component in the lifting apparatus, thereby easily causing damage to the internal structure of the lifting apparatus. Take the cleaning apparatus as an example, in conventional technologies, a brush body for cleaning is generally driven to ascend or descend by a lifting apparatus. In the case where a user applies an external force to the brush body and pulls the brush body, the internal structure of the lifting apparatus is prone to damage, thereby affecting use of the cleaning apparatus and reducing user experience.

### SUMMARY

The present disclosure aims to solve at least one of the technical problems existing in the prior art or the related art.

Therefore, a first aspect of the present disclosure provides a lifting apparatus.

A second aspect of the present disclosure provides a cleaning device.

In view of this, a lifting apparatus is provided according to the first aspect of the embodiments of the present disclosure. The lifting apparatus includes:
a lifting assembly;
a protection assembly, connected to the lifting assembly; and
a driving assembly, where an output end of the driving assembly is connected to the lifting assembly through the protection assembly, and the lifting assembly is configured to drive an object to ascend or descend,
where, in the case where the object is moved by an external force, the protection assembly is separated from the driving assembly.

In a feasible embodiment, the protection assembly includes:
a protection plate, connected to the lifting assembly; and
an elastic member, connected to the protection plate and configured to apply an elastic force to the protection plate such that the protection plate is connected to the driving assembly.

In a feasible embodiment, the protection plate is formed with engagement teeth on a side facing the driving assembly, and in the case where the protection plate abuts against the driving assembly, the protection plate is engaged with the driving assembly.

In a feasible embodiment, the driving assembly is configured to drive the protection plate to rotate in a first direction or a second direction, to drive the lifting assembly; and
in the case where the protection plate rotates in the first direction, the object ascends, and in the case where the protection plate rotates in the second direction, the object descends,
where an end-face tooth angle of the engagement teeth in the first direction is greater than an end-face tooth angle of the engagement teeth in the second direction.

In a feasible embodiment, the lifting assembly includes:
a rotating member, connected to the protection assembly; and
a flexible connecting member, where one end of the flexible connecting member is connected to the rotating member, and another end of the flexible connecting member is configured to be connected to the object,
where, in the case where the rotating member rotates, the flexible connecting member can be wound around the rotating member; and
where the rotating member and the protection plate of the protection assembly are of an integrated structure.

In a feasible embodiment, the driving assembly includes:
a worm wheel, connected to the lifting assembly through the protection assembly;
a worm, connected to the worm wheel; and
a driving member, connected to the worm.

In a feasible embodiment, the lifting apparatus further includes:
a frame; and
a position identification assembly, disposed on the frame and configured to identify a position of the lifting assembly.

In a feasible embodiment, the position identification assembly includes:
a rotating arm, where one end of the rotating arm is hinged to the frame;
a first protruding part, disposed at another end of the rotating arm;
a second protruding part, disposed on the lifting assembly; and
a switch, disposed on a side of the rotating arm distal to the lifting assembly,
where, in the case where the second protruding part is in contact with the first protruding part, the switch is triggered by the rotating arm.

In a feasible embodiment, the position identification assembly further includes:
a resetting member, connected to the rotating arm; and/or
a buffer member, disposed on the rotating arm and located between the rotating arm and the switch; and/or
where the rotating arm is made of an elastic material.

A cleaning device is provided according to a second aspect of the embodiments of the present disclosure. The cleaning device includes:
the lifting apparatus according to any one of the above technical solutions; and
a cleaning assembly, connected to a lifting assembly of the lifting apparatus.

In a feasible embodiment, the cleaning device further includes:
a housing, where the cleaning assembly includes a mounting frame and a cleaning brush, where the cleaning brush is rotatably connected to the mounting member, one end of the mounting frame is hinged to the housing, and the lifting assembly is connected to the mounting frame.

Compared with the prior art, the present disclosure includes at least the following beneficial effects.

The lifting apparatus according to the embodiments of the present disclosure includes a lifting assembly, a protection assembly, and a driving assembly. During the process of using the lifting apparatus to drive an object to ascend or descend, the driving assembly outputs a driving force through the protection assembly to drive the object to ascend or descend through the lifting assembly. After the object ascends or descends in place, in the case where the object is displaced by an external force, the object applies a force on the protection assembly through the lifting assembly, and the protection assembly is separated from the driving assembly. In this case, no rigid mechanical contact will be generated between the driving assembly and the lifting assembly, thereby preventing damage to the structures of the lifting assembly and the driving assembly, extending the service life of the lifting apparatus, improving the control accuracy of the lifting apparatus in lifting and lowering the object, and enhancing the user experience.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same reference numerals are used to represent the same components throughout the drawings. In the drawings:
FIG. 1 is a schematic structural diagram of a lifting apparatus from a first angle according to an embodiment of the present disclosure;
FIG. 2 is a schematic structural diagram of a protection assembly of a lifting apparatus from an angle according to an embodiment of the present disclosure;
FIG. 3 is a schematic structural diagram of a lifting apparatus from a second angle according to an embodiment of the present disclosure;
FIG. 4 is a schematic structural diagram of a lifting apparatus from a third angle according to an embodiment of the present disclosure;
FIG. 5 is a schematic structural diagram of a lifting apparatus from a fourth angle according to an embodiment of the present disclosure;
FIG. 6 is a schematic structural diagram of a lifting apparatus from a fifth angle according to an embodiment of the present disclosure;
FIG. 7 is a schematic structural diagram of a cleaning device from a first angle according to an embodiment of the present disclosure;
FIG. 8 is a schematic structural diagram of a cleaning device from a second angle according to an embodiment of the present disclosure;
FIG. 9 is a schematic structural diagram of a cleaning device from a third angle according to an embodiment of the present disclosure;
FIG. 10 is a schematic structural diagram of a cleaning device from a fourth angle according to an embodiment of the present disclosure; and
FIG. 11 is a schematic structural diagram of a lifting apparatus in the case where a lifting assembly is omitted according to an embodiment of the present disclosure.

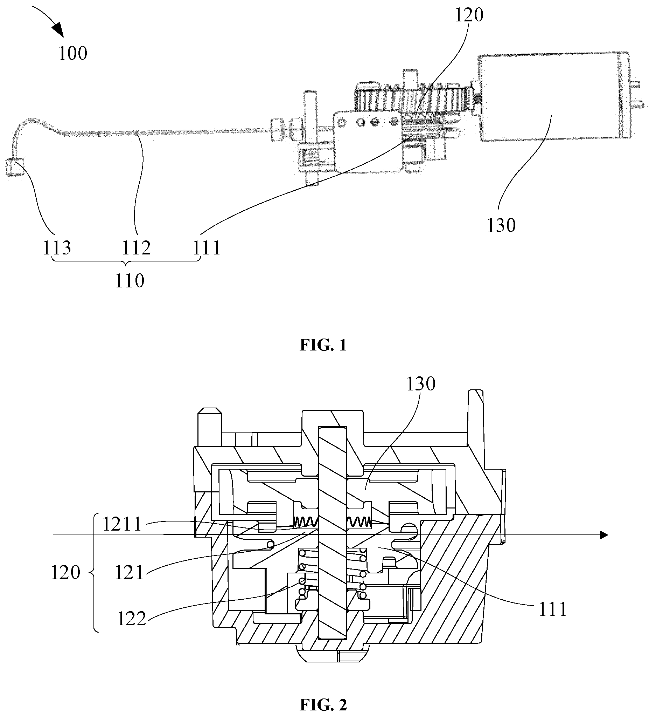

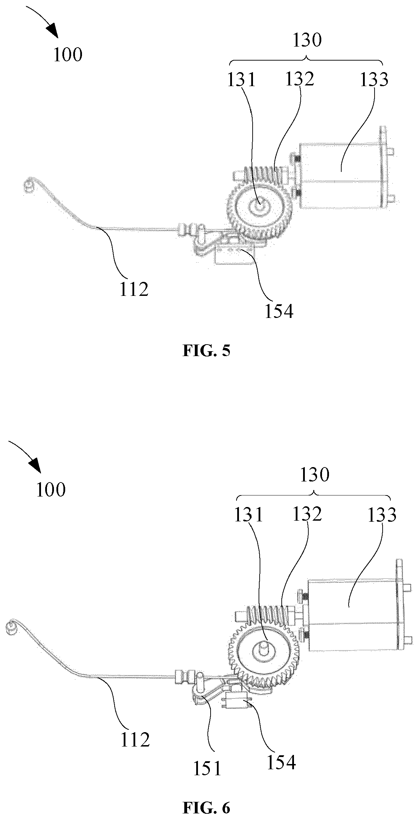

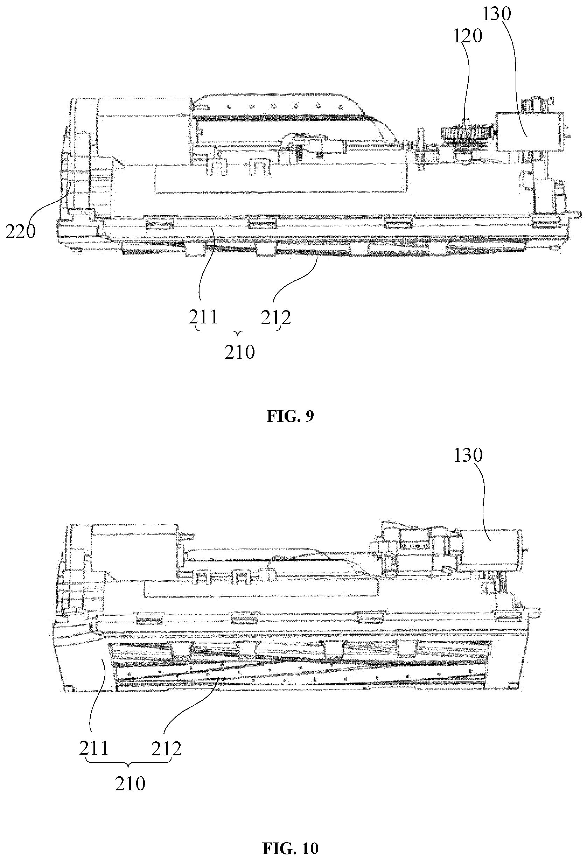

The correspondence relationship between reference numerals and component names in FIGs. 1 to 11 are as follows:
100: lifting apparatus;
110: lifting assembly, 120: protection assembly, 130: driving assembly, 140: frame, 150: position identification assembly, 210: cleaning assembly, 220: housing;
111: rotating member, 112: flexible connecting member, 113: sliding block, 121: protection plate, 122: elastic member, 131: worm wheel, 132: worm, 133: driving member, 151: rotating arm, 152: first protruding part, 153: second protruding part, 154: switch, 155: buffer member;
1211: engagement teeth;
211: mounting frame, 212: cleaning brush.

### DETAILED DESCRIPTION

In order to better understand the foregoing technical solutions, the technical solutions in embodiments of the present disclosure will be described in detail below with reference to the accompanying drawings and specific embodiments. It should be understood that the embodiments of the present disclosure and specific features in the embodiments are detailed descriptions of the technical solutions in the embodiments of the present disclosure, but are not intended to limit the technical solutions in the present disclosure. The embodiments of the present disclosure and the technical features in the embodiments may be combined with one another without conflict.

As shown in FIGs. 1 to 6, a lifting apparatus 100 is provided according to a first aspect of the embodiments of the present disclosure. The lifting apparatus includes: a lifting assembly 110, a protection assembly 120, and a driving assembly 130. The protection assembly is connected to the lifting assembly 110. An output end of the driving assembly 130 is connected to the lifting assembly 110 through the protection assembly 120. The lifting assembly 110 is configured to drive an object to ascend or descend. The protection assembly 120 is separated from the driving assembly 130 in the case where the object is moved by an external force.

The lifting apparatus 100 according to the embodiments of the present disclosure includes a lifting assembly 110, a protection assembly 120, and a driving assembly 130. During the process of using the lifting apparatus 100 to drive an object to ascend or descend, the driving assembly 130 outputs a driving force through the protection assembly 120 to drive the object to ascend or descend through the lifting assembly 110. After the object ascends or descends in place, in the case where the object is displaced by an external force, the object applies a force on the protection assembly 120 through the lifting assembly 110, and the protection assembly 120 is separated from the driving assembly 130. In this case, no rigid mechanical contact will be generated between the driving assembly 130 and the lifting assembly 110, thereby preventing damage to the structures of the lifting assembly 110 and the driving assembly 130, extending the service life of the lifting apparatus 100, improving the control accuracy of the lifting apparatus 100 in lifting and lowering the object, and enhancing the user experience.

Take the application of the lifting apparatus 100 according to the embodiments of the present disclosure to the cleaning device as an example, the brush body of the cleaning device may be connected to the lifting assembly 110, and the cleaning device may be enabled to have two operating states during use. One is that the brush body is lifted, in which case the cleaning device is not required to perform a cleaning operation; and the other is that the brush body is lowered, the brush body can be in contact with a surface to be cleaned, and the cleaning device can perform a cleaning task. For the lifting apparatus 100 according to the embodiments of the present disclosure, it is considered that, under certain operating conditions, a user may pull the brush body to drive the brush body to ascend or descend. Especially, some users will pull the brush body to lower the brush body. During a process in which the brush body is displaced, a force of the brush body is transmitted to the protection assembly 120 through the lifting assembly 110, and the protection assembly 120 can be separated from the driving assembly 130. Based on this, in the case where the user pulls the brush body, the lifting assembly 110 does not come into rigid mechanical contact with the driving assembly 130, thereby preventing the lifting assembly 110 and the driving assembly 130 from being worn, and extending the service life of the lifting assembly 110.

In some examples, the driving assembly 130 may include a power end and an output end. The power end is connected to the output end, the power end applies kinetic energy to the output end, the output end is configured to drive the lifting assembly 110 to move, and the output end may be of a structure such as a rotation shaft or a transmission member that can drive the lifting assembly 110.

As shown in FIGs. 1 and 2, in a feasible embodiment, the protection assembly 120 includes: a protection plate 121 and an elastic member 122. The protection plate 121 is connected to the lifting assembly 110. The elastic member 122 is connected to the protection plate 121 and configured to apply an elastic force to the protection plate 121, enabling the protection plate 121 to be connected to the driving assembly 130.

In the technical solution, the structural composition of the protection assembly 120 is further provided. The protection assembly 120 may include a protection plate 121 and an elastic member 122. In the case where the object connected to the lifting apparatus 100 is not subjected to an external force, the elastic member 122 may apply an elastic force to the protection plate 121, such that the protection plate 121 is connected to the driving assembly 130. In this case, the driving assembly 130 can drive the lifting assembly 110 by outputting a driving force, and the lifting assembly 110 can drive the object to ascend or descend. However, in the case where the object is moved by an external force, the force applied to the object is transmitted to the protection plate 121 through the lifting assembly 110, and the force drives the protection plate 121 to overcome the elastic force of the elastic member 122, such that the protection plate 121 is separated from the driving assembly 130. In this case, no rigid mechanical contact will be generated between the driving assembly 130 and the lifting assembly 110, thereby preventing damage to the structures of the lifting assembly 110 and the driving assembly 130, extending the service life of the lifting apparatus 100, improving the control accuracy of the lifting apparatus 100 in lifting and lowering the object, and enhancing the user experience. Further, in the case where the object loses the external force, the elastic member 122 applies an elastic force to the protection plate 121 again, such that the protection plate 121 abuts against the driving assembly 130, and the connection relationship between the protection plate 121 and the driving assembly 130 is established again. In the case where the driving assembly 130 is turned on, the object can be driven to ascend or descend by the lifting assembly 110 again.

As shown in FIGs. 1 and 2, in a feasible embodiment, the protection plate 121 is formed with engagement teeth 1211 on a side facing the driving assembly 130. In the case where the protection plate 121 abuts against the driving assembly 130, the protection plate 121 is engaged with the driving assembly 130.

In the technical solution, the structural composition of the protection plate 121 is further provided. The protection plate 121 is formed with engagement teeth 1211 on a side facing the driving assembly 130. In the case where the object connected to the lifting apparatus 100 is not subjected to an external force, the elastic member 122 may apply an elastic force to the protection plate 121, the engagement teeth 1211 on the protection plate 121 can be engaged with the driving assembly 130, such that the protection plate 121 is connected to the driving assembly 130. In this case, the driving assembly 130 can drive the lifting assembly 110 by outputting a driving force, and the lifting assembly 110 can drive the object to ascend or descend. However, in the case where the object is moved by an external force, the force applied to the object is transmitted to the protection plate 121 through the lifting assembly 110, and the force drives the protection plate 121 to overcome the elastic force of the elastic member 122, such that the engagement teeth 1211 on the protection plate 121 are separated from the driving assembly 130, and the protection plate 121 can be separated from the driving assembly 130. In this case, no rigid mechanical contact will be generated between the driving assembly 130 and the lifting assembly 110, thereby preventing damage to the structures of the lifting assembly 110 and the driving assembly 130, extending the service life of the lifting apparatus 100, improving the control accuracy of the lifting apparatus 100 in lifting and lowering the object, and enhancing the user experience. Further, in the case where the object loses the external force, the elastic member 122 applies an elastic force to the protection plate 121 again, such that the protection plate 121 abuts against the driving assembly 130, the engagement teeth 1211 on the protection plate 121 can be engaged with the driving assembly 130 again, and the connection relationship between the protection plate 121 and the driving assembly 130 is established again. In the case where the driving assembly 130 is turned on, the object can be driven to ascend or descend by the lifting assembly 110 again.

In a feasible embodiment, the driving assembly 130 is configured to drive the protection plate 121 to rotate in a first direction or a second direction, to drive the lifting assembly 110. In the case where the protection plate 121 rotates in the first direction, the object ascends, and in the case where the protection plate 121 rotates in the second direction, the object descends. An end-face tooth angle of the engagement teeth 1211 in the first direction is greater than an end-face tooth angle of the engagement teeth 1211 in the second direction.

In the technical solution, the operating mode of the driving assembly 130 and the structural composition of the engagement teeth 1211 are further provided. In the case where the driving assembly 130 drives the protection plate 121 to rotate in the first direction, the object may be driven to ascend by the lifting assembly 110. Under this operating condition, the protection assembly 120 disposed between the lifting assembly 110 and the driving assembly 130 may bear a large torque, such that the end-face tooth angle of the engagement teeth 1211 facing the first direction is larger. This arrangement can enable the protection plate 121 to better bear the large torque, thereby extending the service life of the protection assembly 120. In the case where the driving assembly 130 drives the protection plate 121 to rotate in the second direction, the object may be driven to descend by the lifting assembly 110. Under this operating condition, the protection assembly 120 disposed between the lifting assembly 110 and the driving assembly 130 bears a small torque, such that the end-face tooth angle of the engagement teeth 1211 facing the first direction is smaller, thereby reducing running resistance of the driving assembly 130 and improving driving efficiency.

In some examples, the first direction may be counterclockwise, and the second direction may be clockwise. The worm wheel 131 and the worm 132 of the lifting assembly 110 connected to the driving member 133 provide a power source. The rotating member 111 is viewed from the top of the rotating member 111. In the case where the lifting assembly 110 lifts an object, the worm wheel and the worm 132 rotate, and the worm wheel drives the rotating member 111 to rotate counterclockwise through the protection plate 121 to contract the flexible connecting member 112. The protection plate 121 between the worm wheel and the rotating member 111 of the flexible connecting member 112 is required to bear a large torque, and thus the end-face tooth angle of the engagement teeth 1211 is larger. In the case where the lifting apparatus 100 is required to lower the cleaning assembly 210, the driving member 133 rotates reversely, the flexible connecting member 112 is released, and the force transmitted to the rotating member 111 by the worm wheel is small. In this case, the protection plate 121 is not required to bear a large torque, and thus the end-face tooth angle is set to be small.

It can be understood that the elastic member 122 may be a spring, and a protection torque force of the protection plate 121 is affected by an end-face tooth angle, a material, and spring pressure. The positive pressure of the spring forms a rotational resistance at the end-face tooth position, and the resistance is the protection force of the protection plate 121. Based on this, by using the elastic member 122 and the protection plate 121, the entire lifting apparatus 100 can be prevented from bearing a large torque load and causing damage to the mechanism.

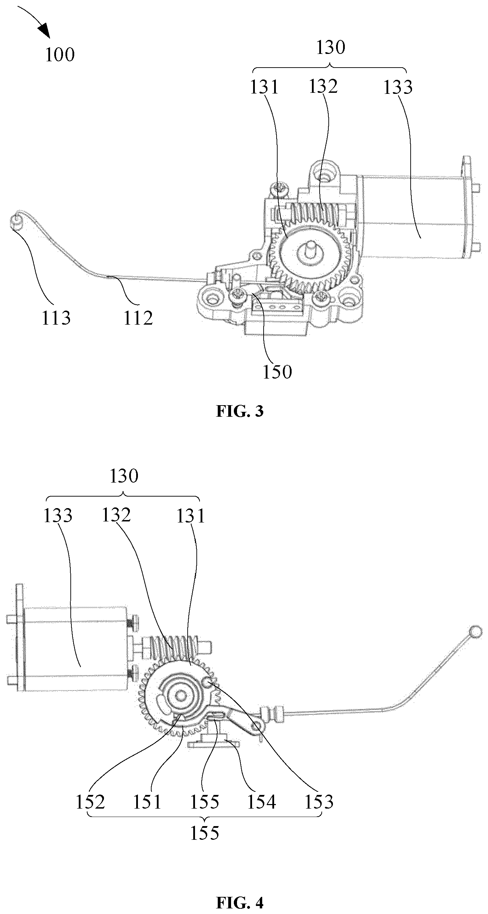

As shown in FIGs. 1 and 3, in a feasible embodiment, the lifting assembly 110 includes: a rotating member 111 and a flexible connecting member 112. The rotating member is connected to the protection assembly 120. One end of the flexible connecting member 112 is connected to the rotating member 111, and another end of the flexible connecting member is configured to be connected to the object. In the case where the rotating member 111 rotates, the flexible connecting member 112 can be wound around the rotating member 111. The rotating member 111 and the protection plate 121 of the protection assembly 120 are of an integrated structure.

In the technical solution, the structural composition of the lifting assembly 110 is further provided. The lifting assembly 110 includes an adapter and a flexible connecting member 112. During operation of the lifting apparatus 100, the driving assembly 130 is connected to the protection assembly 120, the driving assembly 130 drives the protection assembly 120 to rotate, and the protection assembly 120 can drive the connecting member to rotate. In the case where the driving assembly 130 drives the protection plate 121 to rotate in the first direction, the flexible connecting member 112 will be wound around the rotating member 111. In this case, the effective length of the lifting assembly 110 will be reduced, and in this case, the object connected to another end of the flexible connecting member 112 will be lifted. In the case where the driving assembly 130 drives the protection plate 121 to rotate in the second direction, the flexible connecting member 112 will be extended through the rotating member 111. In this case, the effective length of the lifting assembly 110 will be increased, and the object connected to another end of the flexible connecting member 112 will be lowered.

It can be understood that the rotating member 111 may be disc-shaped, such that the flexible connecting member 112 is wound onto the rotating member 111, and the flexible connecting member 112 may be a rope, a steel wire, or a steel cable.

As shown in FIG. 2, in the technical solution, in order to facilitate rotation of the rotating member 111 and protect the driving assembly 130, the rotating member 111 may rotate synchronously with the protection plate 121. Therefore, the rotating member 111 and the protection plate 121 may be of an integrated structure, thereby facilitating synchronous rotation of the rotating member 111 and the protection plate 121 and improving strength of the protection plate 121 and the rotating member 111. In addition, in the case where the protection plate 121 and the rotating member 111 are of an integrated structure, the elastic member 122 may also output a force to the protection plate 121 by applying an elastic force to the rotating member 111, to facilitate a layout of the elastic member 122.

As shown in FIG. 2, it can be understood that the protection plate 121 and the rotating member 111 may also be of a separated structure, for example, designed to be separated in a direction of the arrow. For example, the protection plate 121 may be connected to the rotating member 111 by screws, welding, bonding, or the like. The rotating member 111 and the protection plate 121 may also be connected through other adapters, thereby facilitating adjustment of the arrangement position of the protection plate 121 and sufficient engagement of the protection plate 121 with the driving assembly 130.

As shown in FIGs. 1 and 4, in a feasible embodiment, the driving assembly 130 includes: a worm wheel 131, a worm 132, and a driving member 133. The worm wheel 131 is connected to the lifting assembly 110 through the protection assembly 120. The worm is connected to the worm wheel 131. The driving member is connected to the worm 132.

In the technical solution, the structural composition of the driving assembly 130 is further provided. The driving assembly 130 may include a worm wheel 131, a worm 132, and a driving member 133. During use, the driving member 133 outputs a driving force to act on the worm 132, the worm 132 is engaged with the worm wheel 131, and the worm wheel 131 can be driven to rotate by the rotation of the worm 132. The worm wheel 131 is then connected to the protection assembly 120, and the driving force can be output by the protection assembly 120 to act on the lifting assembly 110. In addition, in the case where the object connected to the lifting assembly 110 is subjected to an external force and generates an unexpected displacement, the protection assembly 120 will be separated from the worm wheel 131 of the driving assembly 130. Based on this, no rigid mechanical contact will be generated between the worm wheel 131 of the driving assembly 130 and the rotating member 111 of the lifting assembly 110, thereby preventing damage to the structures of the lifting assembly 110 and the driving assembly 130, extending the service life of the lifting apparatus 100, improving the control accuracy of the lifting apparatus 100 in lifting and lowering the object, and enhancing the user experience.

In the technical solution, the worm wheel 131, the worm 132, and the driving member 133 are used as the driving assembly 130, enabling smooth output of the driving force and facilitating ascent or descent of the object. The protection assembly 120 and the worm wheel 131 are connected through the engagement teeth 1211, and a spring is disposed at a lower end of the protection plate 121 as the elastic member 122, such that the teeth between the protection plate 121 and the worm wheel 131 can be tightly attached. The worm 132 can drive the worm wheel 131, and the worm wheel 131 can further drive, through the engagement teeth 1211, the protection plate 121 to rotate, enabling the flexible connecting member 112 to be wound or reversely wound, thereby lifting or lowering the main brush. In the case where the user pulls the object by hand, the protection plate 121 will rotate with the flexible connecting member 112. As the worm wheel 131 has difficulty in driving the worm 132 to rotate and a large resistance is present, the position at which the engagement teeth 1211 are attached will separate, the protection plate 121 will descend, and the teeth at both ends will be misaligned, such that the worm wheel 131 will no longer rotate with the protection plate 121, thereby providing protection to the driving assembly 130.

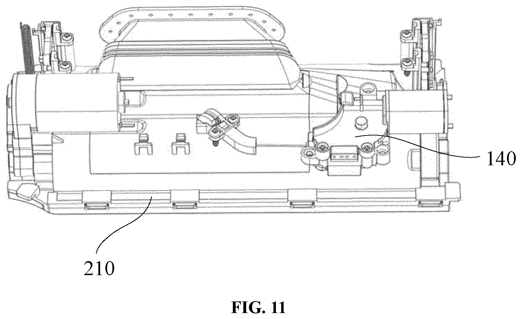

As shown in FIGs. 4 and 11, in a feasible embodiment, the lifting apparatus 100 further includes: a frame 140 and a position identification assembly 150. The position identification assembly 150 is disposed on the frame 140 and configured to identify the position of the lifting assembly 110.

In the technical solution, the lifting apparatus 100 may further include a frame 140 and a position identification assembly 150. With the arrangement of the position identification assembly 150, the position of the lifting assembly 110 may be identified, thereby determining the height at which the object is lifted or lowered, and achieving precise control of the lifting or lowering of the object on this basis.

In some examples, the lifting apparatus 100 may further include a controller. The controller is in communication connection with the position identification assembly 150. The controller is configured to stop supplying power to the driving assembly 130 or provide a certain small current to the driving assembly 130 according to the driving part control signal transmitted by the position identification assembly 150 to maintain the rotating member 111 at the current position, thereby achieving precise control of the lifting and lowering of the object, and reducing the failure rate.

As shown in FIGs. 4, 5, and 6, in a feasible embodiment, the position identification assembly 150 includes: a rotating arm 151, a first protruding part 152, a second protruding part 153, and a switch 154. One end of the rotating arm 151 is hinged to the frame 140. The first protruding part is disposed at another end of the rotating arm 151. The second protruding part is disposed on the lifting assembly 110. The switch is disposed on a side of the rotating arm 151 distal to the lifting assembly 110. In the case where the second protruding part 153 is in contact with the first protruding part 152, the switch 154 is triggered by the rotating arm 151.

In the technical solution, the structural composition of the position identification assembly 150 is further provided. The position identification assembly 150 may include a rotating arm 151, a first protruding part 152, a second protruding part 153, and a switch 154. In the case where the driving assembly 130 is turned on, and the driving assembly 130 transmits a driving force to the lifting assembly 110 through the protection assembly 120, the rotating member 111 of the lifting assembly 110 rotates. During the rotation of the rotating member 111, the second protruding part 153 may be in contact with the first protruding part 152, and the second protruding part 153 and the first protruding part 152 may drive the rotating arm 151 to move, such that the rotating arm 151 abuts against the switch 154. In this case, the position identification apparatus may identify the state of the lifting assembly 110, enabling the interface to achieve precise control of the lifting and lowering of the object, thereby reducing the failure rate.

In a feasible embodiment, the position identification assembly 150 further includes: a resetting member connected to the rotating arm 151.

In the technical solution, the position identification assembly 150 may further include a resetting member. With the arrangement of the resetting member, in the case where the second protruding part 153 moves away from the first protruding part 152 as the rotating member 111 moves, the resetting member may apply a reset force to the rotating arm 151, enabling the rotating arm 151 to be reset, thereby facilitating detection for the next position identification.

As shown in FIG. 4, in a feasible embodiment, the position identification assembly 150 further includes: a buffer member 155 disposed on the rotating arm 151 and located between the rotating arm 151 and the switch 154.

In the technical solution, the position identification assembly 150 may further include a buffer member 155. The rotating arm 151 may abut against the switch 154 through the buffer member 155, preventing the rotating arm 151 from being in rigid contact with the switch 154 to damage the switch 154, thereby extending the service life of the switch 154.

In a feasible embodiment, the rotating arm 151 is made of an elastic material.

In the technical solution, the rotating arm 151 may be directly made of an elastic material. In this case, the rotating arm 151 is in contact with the switch 154, preventing the rotating arm 151 from crashing the switch 154, thereby extending the service life of the switch 154.

Compared with the photoelectric switch 154 in conventional technologies, the lifting apparatus 100 according to the embodiments of the present disclosure, with the arrangement of the pressing-type position identification assembly 150, can perform high-precision identification under a dusty operating condition, thereby facilitating precise control of the lifting apparatus 100. In the lifting apparatus 100, in the case where the rotating member 111 rotates to a designated position, the second protruding part 153 disposed on the rotating member 111 pushes the rotating arm 151, thereby triggering the switch 154. The rotating arm 151 is provided with a resetting member around the rotation center, enabling the rotating arm 151 to return to a non-triggered state from a position at which the button is pressed. Meanwhile, an area in which the rotating arm 151 presses the button is provided with a buffer member 155. That is, the button is pressed by using a plastic cantilever, preventing the switch 154 from being damaged by an excessive force, thereby protecting the service life of the button.

In some examples, the driving member 133 of the driving assembly 130 may be a motor, and the identification and control logic of the position identification assembly 150 may include:

### Normal operating condition:

In the case where the motor rotates forward (rotates counterclockwise), the state of the switch 154 of the position identification assembly 150 transitions from 0→1→0 (where 1 represents that the switch 154 is triggered, 0 represents that the switch is not triggered, and 010 represents that the switch rotates to bypass the position of the trigger point), the motor stops, and the object ascends in place.

In the case where the motor rotates reversely (rotates clockwise), the state of the switch 154 transitions from 0→1→0, the motor stops, and the object descends in place.

### Abnormal operating condition:

The initial state of the switch 154 is 1, indicating that the object is in an intermediate state (does not descend or ascend in place).

In the case where the motor rotates forward, the state of the switch 154 transitions from 1→0, the motor stops, and the object ascends in place.

In the case where the motor rotates reversely, the state of the switch 154 transitions from 1→0, the motor stops, and the object descends in place.

Through the above process, the transition from the abnormal state to the normal state is possible.

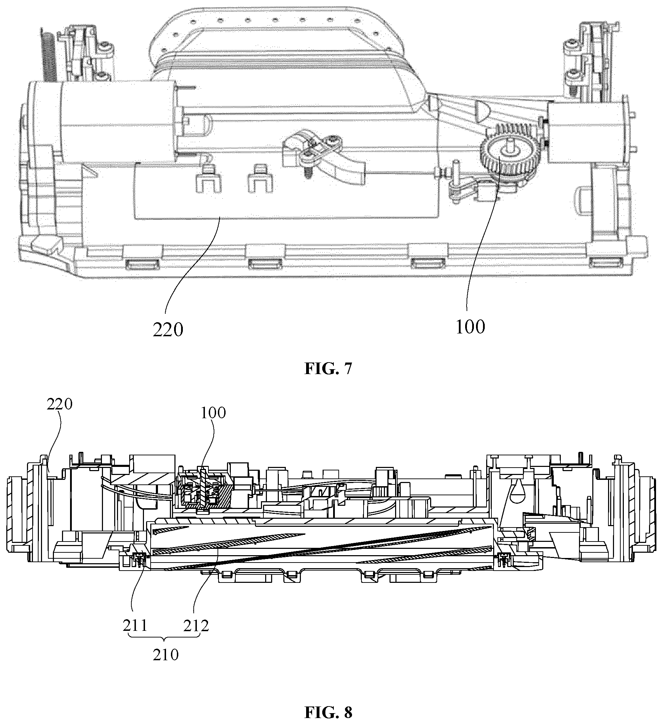

As shown in FIGs. 7 to 11, a second aspect of the embodiments of the present disclosure provides a cleaning device. The cleaning device includes: the lifting apparatus 100 according to any one of the above technical solutions; and a cleaning assembly 210, where the cleaning assembly 210 is connected to the lifting assembly 110 of the lifting apparatus 100.

As the cleaning device according to the embodiments of the present disclosure includes the lifting apparatus 100 according to any one of the above technical solutions, the cleaning device has all the beneficial effects of the lifting apparatus 100 according to the above technical solutions.

The cleaning device according to the embodiments of the present disclosure, with the arrangement of the lifting assembly 110, can lift or lower the cleaning assembly 210, enabling the cleaning device to have various operating states. For example, in the case where the cleaning assembly 210 is fully lifted, the cleaning assembly 210 may be separated from the ground. In this case, the cleaning device is not required to perform a cleaning task, and the cleaning device may move quickly. For another example, the cleaning assembly 210 may be controlled to be lowered, such that the cleaning assembly 210 is in contact with the cleaning surface, enabling the cleaning device to perform a cleaning task. As the lowering range of the cleaning assembly 210 of the cleaning device increases, the abutting effect between the cleaning assembly 210 and the cleaning surface will be stronger, resulting in a better cleaning effect of the cleaning device.

For the cleaning device according to the embodiments of the present disclosure, the cleaning assembly 210 of the cleaning device may be connected to the lifting assembly 110, and the cleaning device may be enabled to have two operating states during use. One is that the cleaning assembly 210 is lifted, in which case the cleaning device is not required to perform a cleaning operation; and the other is that the cleaning assembly 210 is lowered, the brush body can be in contact with a surface to be cleaned, and the cleaning device can perform a cleaning task. For the lifting apparatus 100 according to the embodiments of the present disclosure, it is considered that, under certain operating conditions, a user may pull the cleaning assembly 210 to drive the cleaning assembly 210 to ascend or descend. Especially, some users will pull the cleaning assembly 210 to lower the cleaning assembly 210. During a process in which the cleaning assembly 210 is displaced, a force of the cleaning assembly 210 is transmitted to the protection assembly 120 through the lifting assembly 110, and the protection assembly 120 can be separated from the driving assembly 130. Based on this, in the case where the user pulls the cleaning assembly 210, the lifting assembly 110 does not come into rigid mechanical contact with the driving assembly 130, thereby preventing the lifting assembly 110 and the driving assembly 130 from being worn, and extending the service life of the lifting assembly 110 and the cleaning device.

In a feasible embodiment, the cleaning device further includes: a housing 220. The cleaning assembly 210 includes a mounting frame 211 and a cleaning brush 212. The cleaning brush 212 is rotatably connected to the mounting member. One end of the mounting frame 211 is hinged to the housing 220, and the lifting assembly 110 is connected to the mounting frame 211.

In the technical solution, the cleaning device may further include a housing 220. The cleaning assembly 210 may include a mounting frame 211 and a cleaning brush 212. One end of the mounting frame 211 is hinged to the housing 220, and the lifting assembly 110 is then connected to the mounting member. The position of the cleaning brush 212 can be adjusted by driving the mounting frame 211 to move through the lifting assembly 110.

In some examples, a mounting groove is formed on the mounting frame 211. The lifting assembly 110 of the lifting apparatus 100 further includes a sliding block 113. The sliding block 113 is disposed at one end of the flexible connecting member 112 distal to the rotating member 111. The sliding block 113 is configured to be disposed in the mounting groove. As the length of the flexible connecting member 112 becomes shorter, the sliding block 113 may abut against a limiting member on a groove wall of the mounting groove, and the sliding block 113 can drive the mounting frame 211 to be lifted, thereby driving the cleaning brush 212 to ascend.

In the present disclosure, the terms "first", "second", and "third" are merely used for descriptive purposes, and shall not be understood as indicating or implying relative importance. The term "a plurality of" means two or more, unless explicitly defined otherwise. Terms such as "mount", "connect", "link", and "fix" should be understood in a broad sense. For example, "connect" may refer to a fixed connection, a detachable connection, or an integral connection, and "link" may refer to a direct linkage, or an indirect linkage by means of an intermediate medium. For those of ordinary skill in the art, the specific meanings of the aforementioned terms in the present disclosure can be understood according to specific conditions.

In the description of the present disclosure, it should be understood that orientations or positional relationships indicated by terms such as "upper", "lower", "left", "right", "front", and "rear" are those shown based on the accompanying drawings, and are merely intended to facilitate and simplify description of the present disclosure rather than to indicate or imply that the indicated apparatus or unit must have a specific direction and be structured and operated according to the specific orientation, and should not be construed as limiting the present disclosure.

In the description of the specification, the description of terms "one embodiment", "some embodiments", "a specific embodiment", and the like means that specific features, structures, materials, or characteristics described in connection with the embodiments or examples are included in at least one embodiment or example of the present disclosure. In the specification, the schematic description of the aforementioned terms does not necessarily refer to the same embodiment or example. Moreover, the specific features, structures, materials, or characteristics described may be combined in a suitable manner in any one or more embodiments or examples.

The above are only preferred embodiments of the present disclosure, and are not intended to limit the present disclosure. For those skilled in the art, the present disclosure can be modified and varied. Any modification, equivalent replacement, improvement, and the like made within the spirit and principle of the present disclosure shall all fall within the protection scope of the present disclosure.

## Claims

1. A lifting apparatus, comprising:
a lifting assembly;
a protection assembly, connected to the lifting assembly; and
a driving assembly, wherein an output end of the driving assembly is connected to the lifting assembly through the protection assembly, and the lifting assembly is configured to drive an object to ascend or descend,
wherein, in a case where the object is moved by an external force, the protection assembly is separated from the driving assembly.

2. The lifting apparatus according to claim 1, wherein the protection assembly comprises:
a protection plate, connected to the lifting assembly; and
an elastic member, connected to the protection plate and configured to apply an elastic force to the protection plate such that the protection plate is connected to the driving assembly.

3. The lifting apparatus according to claim 2, wherein
the protection plate is formed with engagement teeth on a side facing the driving assembly, and in a case where the protection plate abuts against the driving assembly, the protection plate is engaged with the driving assembly.

4. The lifting apparatus according to claim 3, wherein
the driving assembly is configured to drive the protection plate to rotate in a first direction or a second direction, to drive the lifting assembly; and
in a case where the protection plate rotates in the first direction, the object ascends, and in a case where the protection plate rotates in the second direction, the object descends,
wherein an end-face tooth angle of the engagement teeth in the first direction is greater than an end-face tooth angle of the engagement teeth in the second direction.

5. The lifting apparatus according to any one of claims 1 to 4, wherein the lifting assembly comprises:
a rotating member, connected to the protection assembly; and
a flexible connecting member, wherein one end of the flexible connecting member is connected to the rotating member, and another end of the flexible connecting member is configured to be connected to the object,
wherein, in a case where the rotating member rotates, the flexible connecting member can be wound around the rotating member; and
wherein the rotating member and the protection plate of the protection assembly are of an integrated structure.

6. The lifting apparatus according to any one of claims 1 to 4, wherein the driving assembly comprises:
a worm wheel, connected to the lifting assembly through the protection assembly;
a worm, connected to the worm wheel; and
a driving member, connected to the worm.

7. The lifting apparatus according to any one of claims 1 to 4, further comprising:
a frame; and
a position identification assembly, disposed on the frame and configured to identify a position of the lifting assembly.

8. The lifting apparatus according to claim 7, wherein the position identification assembly comprises:
a rotating arm, wherein one end of the rotating arm is hinged to the frame;
a first protruding part, disposed at another end of the rotating arm;
a second protruding part, disposed on the lifting assembly; and
a switch, disposed on a side of the rotating arm distal to the lifting assembly,
wherein, in a case where the second protruding part is in contact with the first protruding part, the switch is triggered by the rotating arm.

9. The lifting apparatus according to claim 8, wherein the position identification assembly further comprises:
a resetting member, connected to the rotating arm; and/or
a buffer member, disposed on the rotating arm and located between the rotating arm and the switch; and/or
wherein the rotating arm is made of an elastic material.

10. A cleaning device, comprising:
the lifting apparatus according to any one of claims 1 to 9; and
a cleaning assembly, connected to a lifting assembly of the lifting apparatus.

11. The cleaning device according to claim 10, further comprising:
a housing, wherein the cleaning assembly comprises a mounting frame and a cleaning brush, wherein the cleaning brush is rotatably connected to the mounting member, one end of the mounting frame is hinged to the housing, and the lifting assembly is connected to the mounting frame.
